# EUROPÄISCHE PATENTSCHRIFT

(11) **EP 2 281 444 B1**
(45) Veröffentlichungstag und Bekanntmachung des Hinweises auf die Patenterteilung: **16.05.2012**
(21) Anmeldenummer: 09010041.3
(22) Anmeldetag: 04.08.2009
(51) Int. Cl.: A01G 25/14

(54) **Gießkannen-Brausekopf aus Kunststoff sowie Verfahren zu dessen Herstellung**
Plastic watering can sprinkler head and method for its manufacture
Pomme de douche d'arrosoir en plastique ainsi que son procédé de fabrication

(43) Veröffentlichungstag der Anmeldung: 09.02.2011
(73) Patentinhaber: Geli Thermo Plastic Gebr. Lippert GmbH, 63755 Alzenau-Michelbach (DE)
(72) Erfinder: Lippert, Thomas, 63755 Alzenau (DE); Lippert, Günter, 63755 Alzenau (DE)
(74) Vertreter: Schubert, Siegmar

(56) Entgegenhaltungen:
- DE-U1- 9 308 123
- DE-U1- 9 407 233
- DE-U1- 9 412 455
- DE-U1- 20 114 304

## Beschreibung

Die Erfindung betrifft einen Gießkannen-Brausekopf aus Kunststoff nach dem Oberbegriff des Anspruchs 1, wie z.B. DE 201 14 304 U1.

Ein weiterer Aspekt der Erfindung betrifft ein Verfahren zur Herstellung eines solchen Gießkannen-Brausekopfs.

Gießkannen-Brauseköpfe sind übliche Bestandteile von Gießkannen zur künstlichen Beregnung, die auf jeweils eine von einem Gefäß der Gießkanne abstehende Tülle aufgesetzt werden können.

Herkömmliche Brausemundstücke aus Kunststoff sind aus zwei Teilen längs jeweils eines ringförmigen Randabschnitts des ersten Teils bzw. des zweiten Teils fest flüssigkeitsdicht zusammengesetzt. Das erste dieser Teile, welches einen Rohransatz aufweist, der auf die Tülle der Gießkanne aufsteckbar ist, wird auch als Brausenunterteil bezeichnet. Das zweite Teil, welches die Brauselöcher aufweist, durch die ein zwischen dem zweiten Teil und dem ersten Teil gebildeter Raum in dem Gießkannen-Brausekopf nach außen teilweise offen ist, wird auch Brausenoberteil genannt.

Der ringförmige Randabschnitt des ersten Teils mit dem Rohransatz ist gegenüber der schief konischen Grundform des ersten Teils verstärkt, um zusammen mit dem zweiten Teil, dessen ringförmiger Randabschnitt als Unterschneidung ausgebildet ist, fest zu einem bekannten Gießkannen-Brausekopf zusammengepresst zu werden. Trotz sorgfältiger Fertigung sind jedoch die beiden Teile, aus denen der Gießkannen-Brausekopf aus Kunststoff besteht, nicht immer zuverlässig rundum die ringförmigen Randabschnitte der beiden Teile fest und flüssigkeitsdicht miteinander verbunden. Vielmehr können undichte Stellen auftreten, aus denen das Wasser bei dem Gießvorgang in unerwünschter Weise außerhalb der Brauselöcher austritt.

Der vorliegende Erfindung liegt das technische Problem zugrunde, unter Vermeidung der Nachteile der bekannten Gießkannen-Brauseköpfe aus Kunststoff, solche Gießkannen-Brauseköpfe zu schaffen, deren beide Teile zuverlässig flüssigkeitsdicht entlang den gesamten ringförmigen Randabschnitten miteinander fest verbunden sind.

Dem weiteren Aspekt der Erfindung liegt die Aufgabe zugrunde, solche Gießkannen-Brauseköpfe unkompliziert herzustellen.

Erstere Aufgabe wird für einen Gießkannen-Brausekopf aus Kunststoff mit den in Anspruch 1 angegebenen Merkmalen gelöst.

Das Lösungsprinzip beruht darauf, dass die beiden Teile des Gießkannen-Brausekopfs aus ultraschallverschweißbarem Kunststoff derart geformt sind, dass sie zur Ultraschallverschweißung besonders geeignet sind, um einen mit Ausnahme der Brauselöcher und des Rohransatzes dichten Gießkannen-Brausekopf zu bilden, der insbesondere entlang der miteinander verbundenen ringförmigen Randabschnitte der beiden Teile nicht undicht ist. Hierzu sind die beiden ringförmigen Randabschnitte der beiden Teile, nämlich des einen Rohransatz aufweisenden ersten Teils und des Brauselöcher aufweisenden zweiten Teils, als plane Flächen ausgeformt, die zum Ultraschallverschweißen zueinander parallel anliegend angeordnet sind, indem sie so aneinander gedrückt werden, und im Fertigungsendzustand in dieser Lage miteinander ultraschallverschweißt sind. Es hat sich herausgestellt, dass durch die Formgebung der beiden ringförmigen Randabschnitte und die Ultraschallverschweißung in dem Verbindungsbereich entlang der ringförmigen Randabschnitte der beiden Teile eine zuverlässig dichte Verbindung erzielt werden kann, obwohl die Materialstärke der beiden miteinander verbundenen Kunststoffteile materialsparend herabgesetzt sein kann.

Besonders vorteilhaft ist nach Anspruch 2 von dem ringförmigen, als plane Fläche ausgeformten Randabschnitt des einen der beiden Teile ein von der planen Fläche im Wesentlichen rechtwinklig abstehender zylindrischer Ansatz ausgeformt, der den ringförmigen planen Randabschnitt des anderen der beiden Teile seitlich einschließt. Damit wird außer einem hochwertigen Aussehen des fertiggestellten Gießkannen-Brausekopfs eine weitgehend flächendeckende Positionierung des ringförmigen, als plane Fläche ausgeformten Randabschnitts des einen der beiden Teile an dem ebenfalls als plane Fläche ausgeformten Randabschnitt, jedoch mit dem zusätzlichen zylindrischen Ansatz ausgeformten anderen der beiden Teile vor dem Ultraschallverschweißen dieser beiden Teile erreicht.

Wie oben erwähnt bestehen die beiden Teile aus einem ultraschallverschweißbaren Kunststoff. Ein solcher Kunststoff kann beispielsweise nach Anspruch 3 geeignetes Polypropylen sein oder gemäß Anspruch 4 Polyäthylen.

Analog zu den Sachansprüchen 1 bis 4 zeichnen sich ein erfindungsgemäßes Verfahren zur unkomplizierten Herstellung solcher Gießkannen-Brauseköpfe und dessen Varianten durch die Merkmale der Ansprüche 5 bis 8 aus. Zu den mit diesen Verfahren erzielten Vorteilen gehören auch diejenigen, welche die nach diesen Verfahren hergestellten Gießkannen-Brauseköpfe als Endprodukte erbringen.

Ein Ausführungsbeispiel der Erfindung wird im Folgenden anhand einer Zeichnung mit einer Figur erläutert, aus der sich weitere vorteilhafte Einzelheiten ergeben können. Es zeigt:

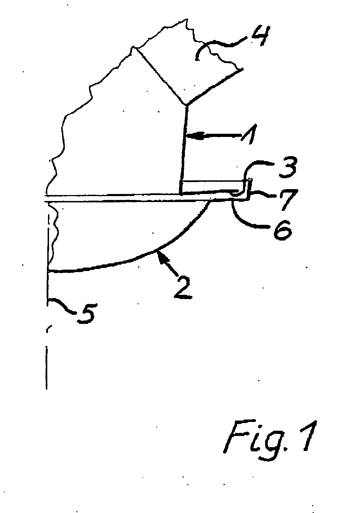

- Figur 1: einen Teil-Längsschnitt aus einem Ausschnitt eines Gieß- kannen-Brausekopfs, in Gebrauchslage der Gießkanne beim Gießen, dessen erstes Teil und dessen zweites Teil zur Ver- anschaulichung gelöst in geringem Abstand zueinander dar- gestellt sind.

In Figur 1 ist ein erstes Teil des Gießkannen-Brausekopfs aus ultraschallverschweißbarem Kunststoff mit 1 bezeichnet und ein zweites Teil aus ebensolchem Kunststoff mit 2. Das erste Teil ist, abgesehen von seinem in Figur 1 waagerechten, planen Randabschnitt 3 in herkömmlicher Weise mit einem zylindrischen Rohransatz 4 und insgesamt im Wesentlichen schief konusförmig geformt.

Der zweite Teil 2 des Gießkannen-Brausekopfs mit nicht dargestellten Brauselöchern ist in üblicher Weise im Wesentlichen in Form einer Kugelkalotte rotationssymmetrisch zu einer fiktiven Mittelachse 5 geformt, ausgenommen einem Randbereich, der dem planen Randabschnitt 3 des ersten Teils 1 im zusammengesetzten Zustand des Brausekopfs zugewandt ist. Dieser Randbereich des zweiten Teils 2 umfasst einen planen, in Figur 1 waagerechten Randabschnitt 6, der kreisringförmig ist, sowie einen zylindrischen Ansatz 7, der radial außen von dem planen Randabschnitt 6 in Figur 1 vertikal nach oben, also rechtwinklig abstehend ausgeformt ist. Der plane Randabschnitt 6 mit dem zylindrischen Ansatz 7 des zweiten Teils 2 sind so ausgebildet, dass der plane Randabschnitt 3 des ersten Teils 1 vollständig innerhalb des zylindrischen Ansatzes 7 des zweiten Teils 2 angeordnet ist. Zur Ultraschallverschweißung und während der Ultraschallverschweißung sind abweichend von Figur 1 das erste Teil 1 und das zweite Teil 2 so zusammengedrückt, dass die planen Randabschnitte 3 und 6 aneinanderliegen.

Im durch Ultraschallschweißung fertiggestellten Zustand des Gießkannen-Brausekopfs liegt somit der plane Randabschnitt 3 des ersten Teils dauerhaft auf dem planen Randabschnitt 6 des zweiten Teils auf, so dass nach der Ultraschallverschweißung eine zuverlässig flüssigkeitsdichte Verbindung zwischen diesen beiden planen Randabschnitten 3 und 6 vorliegt.

Wie oben erwähnt, bestehen die beiden Teile 1 und 2 zweckmäßig aus ultraschallverschweißbarem Polypropylen oder Polyäthylen.

### Bezugszahlenliste

- 1: erstes Teil
- 2: zweites Teil
- 3: planer Randabschnitt
- 4: Rohransatz
- 5: Mittelachse
- 6: planer Randabschnitt
- 7: zylindrischer Ansatz

## Patentansprüche

1. Gießkannen-Brausekopf aus Kunststoff, umfassend ein einen Rohransatz (4) aufweisendes erstes Teil (1) und ein Brauselöcher aufweisendes zweites Teil (2), wobei das erste Teil (1) und das zweite Teil (2) längs jeweils eines ringförmigen Randabschnitts (3, 6) des ersten Teils (1) bzw. des zweiten Teils (2) flüssigkeitsdicht miteinander verbunden sind,
**dadurch gekennzeichnet,**
**dass** die beiden Teile (1, 2) aus ultraschaüverschweißbarem Kunststoff bestehen und
**dass** die beiden ringförmigen Randabschnitte (3, 6) der beiden Teile (1, 2) als plane Flächen ausgeformt sind, die zueinander parallel anliegend angeordnet sind und miteinander ultraschallverschweißt sind.

2. Gießkannen-Brausekopf nach Anspruch 1,
**dadurch gekennzeichnet,**
**dass** von dem ringförmigen, als plane Fläche ausgeformten Randabschnitt (6) des einen (2) der beiden Teile (1, 2) ein im Wesentlichen rechtwinklig abstehender zylindrischer Ansatz (7) ausgeformt ist, der den ringförmigen planen Randabschnitt (3) des anderen (1) der beiden Teile (1, 2) seitlich einschließt.

3. Gießkannen-Brausekopf nach Anspruch 1 oder 2,
**dadurch gekennzeichnet,**
**dass** die beiden Teile (1, 2) aus Polypropylen bestehen.

4. Gießkannen-Brausekopf nach Anspruch 1 oder 2,
**dadurch gekennzeichnet,**
**dass** die beiden Teile (1, 2) aus Polyäthylen bestehen.

5. Verfahren zur Herstellung eines Gießkannen-Brausekopfs aus Kunststoff, wobei ein einen Rohransatz (4) aufweisendes erstes Teil (1) und ein Brauselöcher aufweisendes zweites Teil (2) längs jeweils eines ringförmigen Randabschnitts (3, 6) des ersten Teils (1) bzw. des zweiten Teils (2) flüssigkeitsdicht miteinander verbunden werden,
**dadurch gekennzeichnet,**
**dass** als erstes Teil (1) und als zweites Teil (2) solche aus ultraschallverschweißbarem Kunststoff verwendet werden, deren ringförmige Randabschnitte (3, 6) als plane Flächen ausgeformt sind,
**dass** die beiden Teile (1, 2) mit ihren planen Randabschnitten (3, 6) zueinander parallel aneinander gedrückt werden und miteinander ultraschallverschweißt werden.

6. Verfahren nach Anspruch 5,
**dadurch gekennzeichnet,**
**dass** als erstes Teil (1) oder als zweites Teil (2) ein Teil verwendet wird, an dem von dem ringförmigen, als plane Fläche ausgeformten Randabschnitt (3 bzw. 6) ein im Wesentlichen rechtwinklig abstehender zylindrischer Ansatz (7) ausgeformt ist, und
**dass** in den zylindrischen Ansatz (7) der ringförmige plane Randabschnitt (3) des anderen (1) der beiden Teile (1, 2) seitlich eingeschlossen wird.

7. Verfahren nach einem der Ansprüche 5 und 6,
**dadurch gekennzeichnet,**
**dass** die beiden Teile (1, 2) aus Polypropylen hergestellt sind.

8. Verfahren nach einem der Ansprüche 5 und 6,
**dadurch gekennzeichnet,**
**dass** die beiden Teile (1, 2) aus Polyäthylen hergestellt sind.

## Claims

1. Plastic watering can sprinkler head of synthetic material comprising a first portion (1) having a tube connection (4) and a section portion (2) having sprinkler holes, wherein the first portion (1) and the second portion (2) are liquid-tightly connected with one another along a ring-shaped edge section (3, 6) each of the first portion (1) and of the second portion (2), respectively,
**characterized in**
**that** the two portions (1, 2) consist of ultrasonically weldable plastic material and
**that** the two ring-shaped edge sections (3, 6) of the two portions (1, 2) are shaped out as plane faces disposed as adjoining in parallel relative to each other and ultrasonically welded with one another.

2. Plastic watering can sprinkler head according to claim 1,
**characterized in**
**that** from the ring-shaped edge section (6) of the first one (2) of the two portions (1, 2) shaped out as a plane face, a substantially rectangular projecting cylindrical attachment (7) is shaped out laterally enclosing the ring-shaped plane edge section (3) of the other (1) of the portions (1, 2).

3. Plastic watering can sprinkler head according to claim 1 or 2,
**characterized in**
**that** the two portions (1, 2) consist of polypropylene.

4. Plastic watering can sprinkler head according to claim 1 or 2,
**characterized in**
**that** the two portions (1, 2) consist of polyethylene.

5. Method for the manufacture of a plastic watering can sprinkler head of synthetic material, wherein a first portion (1) having a tube connection (4) and a second portion (2) having sprinkler holes are liquid-tightly connected with one another along a ring-shaped edge section (3, 6) each of the first portion (1) and of the second portion (2),
**characterized in**
**that** as a first portion (1) and as a second portion (2) those of ultrasonically weldable plastic material are used the ring-shaped edge portions (3, 5) of which are shaped out as plane faces,
**that** the two portions (1, 2) are pressed towards each other, with the plane edge sections (3, 6 in parallel relative to each other, and are ultrasonically welded with one another.

6. Method according to claim 5.
**characterized in**
**that** as the first portion (1) or as a second portion (2), a portion is used on which from the ring-shaped edge portion (3 or 6) shaped out as a plane face a substantially rectangular projecting cylindrical attachment (7) is shaped out, and
**that** the ring-shaped plane edge section (3) of the other (1) of the two portions
(1, 2) is laterally enclosed in the cylindrical attachment (7),

7. Method according to one of claims 5 and 6,
**characterized in**
**that** the two portions (1, 2) are made of polypropylene.

8. Method according to one of claims 5 and 6,
**characterized in**
**that** the two portions (1, 2) are made of polyethylene.

## Revendications

1. Pomme d'arrosoir en matière plastique, comprenant un premier élément (1) présentant une tubulure (4) et un deuxième élément (2) présentant des trous d'arrosage, le premier élément (1) et le deuxième élément (2) étant reliés entre eux d'une manière étanche aux fluides respectivement le long d'une partie de bord (3, 6) de forme annulaire du premier élément (1) ou du deuxième élément (2),
**caractérisée**
**en ce que** les deux éléments (1, 2) sont réalisés en matière plastique soudable par ultrasons et
**en ce que** les deux parties de bord (3, 6) annulaires des deux éléments (1, 2) sont réalisées sous forme de surfaces planes, disposées adjacentes et parallèles entre elles, et soudées l'une à l'autre par ultrasons.

2. Pomme d'arrosoir selon la revendication 1,
**caractérisée en ce qu'**est formé, à partir de la partie de bord (6) annulaire à surface plane de l'un (2) des deux éléments (1, 2), un épaulement cylindrique (7) faisant saillie sensiblement à angle droit, qui enferme latéralement la partie de bord (3) annulaire plane de l'autre (1) des deux éléments (1, 2).

3. Pomme d'arrosoir selon la revendication 1 ou 2,
**caractérisée en ce que**
les deux éléments (1, 2) sont en polypropylène,

4. Pomme d'arrosoir selon la revendication 1 ou 2,
**caractérisée en ce que**
les deux parties (1, 2) sont en polyéthylène.

5. Procédé de fabrication d'une pomme d'arrosoir en matière plastique, dans lequel un premier élément (1) présentant une tubulure (4) et un deuxième élément (2) présentant des trous d'arrosage sont reliés entre eux d'une manière étanche aux fluides respectivement le long d'une partie de bord (3, 6) de forme annulaire du premier élément (1) ou du deuxième élément (2),
**caractérisé**
**en ce que** l'on utilise comme premier élément (1) et comme deuxième élément (2) des éléments en matière plastique soudables par ultrasons dont les parties de bord annulaires (3, 6) sont réalisées sous forme de surfaces planes,
**en ce que** les deux éléments (1, 2) avec leurs parties de bord (3, 6) planes sont pressés l'un contre l'autre de manière parallèle entre eux et soudés l'un à l'autre par ultrasons.

6. Procédé selon la revendication 5,
**caractérisé**
**en ce que** l'on utilise comme premier élément (1) ou comme deuxième élément (2) un élément sur lequel est formé, à partir de la partie de bord (3 ou 6) annulaire à surface plane, un épaulement cylindrique (7) faisant saillie sensiblement à angle droit, et
**en ce que** la partie de bord (3) annulaire plane de l'autre (1) des deux éléments (1, 2) est enfermée latéralement dans l'épaulement cylindrique (7).

7. Procédé selon l'une des revendications 5 et 6,
**caractérisé en ce que**
les deux éléments (1, 2) sont en polypropylène.

8. Procédé selon l'une des revendications 5 et 6,
**caractérisé en ce que**
les deux éléments (1, 2) sont en polyéthylène.
